(19) Europäisches Patentamt

European Patent Office

Office européen des brevets

(11) **EP 2 895 264 B1**

(12) # EUROPEAN PATENT SPECIFICATION

(45) Date of publication and mention
of the grant of the patent:
**28.08.2019 Bulletin 2019/35**

(21) Application number: **13713013.4**

(22) Date of filing: **14.03.2013**

(51) Int Cl.:
**B01J 20/02** (2006.01)     **B01J 20/04** (2006.01)
**B01J 20/20** (2006.01)     **B01J 20/32** (2006.01)
**C02F 1/28** (2006.01)     **C02F 101/12** (2006.01)

(86) International application number:
**PCT/US2013/031366**

(87) International publication number:
**WO 2014/042682 (20.03.2014 Gazette 2014/12)**

(54) **METHOD FOR REMOVING CHLORAMINE FROM AQUEOUS SOLUTIONS**

VERFAHREN ZUM ENTFERNEN VON CHLORAMIN AUS WÄSSRIGEN LÖSUNGEN

MÉTHODE POUR ÉLIMINER DE LA CHLORAMINE DE SOLUTIONS AQUEUSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2012 US 201261699324 P**

(43) Date of publication of application:
**22.07.2015 Bulletin 2015/30**

(73) Proprietor: **3M Innovative Properties Company
St. Paul, MN 55133-3427 (US)**

(72) Inventors:
- **STOUFFER, Mark, R.**
  **Saint Paul, MN 55133-3427 (US)**
- **MCLARTY, Steven, D.**
  **Saint Paul, MN 55133-3427 (US)**
- **MORENO, Angela, M.**
  **Saint Paul, MN 55133-3427 (US)**
- **SIEDLE, Allen, R.**
  **Saint Paul, MN 55133-3427 (US)**

- **WOOD, Thomas, E.**
  **Saint Paul, MN 55133-3427 (US)**
- **DOYLE, Meredith, J.**
  **Saint Paul, MN 55133-3427 (US)**

(74) Representative: **Vossius & Partner
Patentanwälte Rechtsanwälte mbB
Siebertstrasse 3
81675 München (DE)**

(56) References cited:
**WO-A1-2011/125504     US-A1- 2004 124 152
US-B1- 6 270 822     US-B1- 6 342 129**

- **STEPHANIE-ANGELIKA WOHLGEMUTH ET AL:
  "A one-pot hydrothermal synthesis of tunable
  dual heteroatom-doped carbon microspheres",
  GREEN CHEMISTRY, vol. 14, no. 3, 3 April 2012
  (2012-04-03), pages 741-748, XP055064822, ISSN:
  1463-9262, DOI: 10.1039/c2gc16415a**

Description

## TECHNICAL FIELD

A method for removing chloramines from aqueous solutions by using an active chloramine removal material comprising carbon, nitrogen, and sulfur is provided.

## BACKGROUND

Chloramine is commonly used in low concentration as a secondary disinfectant in municipal water distribution systems as an alternative to chlorination with free chlorine. Concerns over taste and odor of chloramine treated water have led to an increase in the demand for water filters with chloramine removal capabilities.

Carbon particles, such as activated carbon particles, have been used to remove chloramine from aqueous streams. Improvements in removal of chloramine can be achieved by reducing the mean particle diameter of the carbon and by increasing the carbon bed contact time. Although parameters such as contact time and mean particle diameter are known to affect chloramine removal efficiencies, more significant improvements are desired without significantly increasing the pressure drop across the filtration media.

U.S. Pat. No. 5,338,458 (Carrubba et al.) discloses an improved process for the removal of chloramine from gas or liquid media by contacting the media with a catalytically-active carbonaceous char.

U.S. Pat. No. 6,699,393 (Baker et al.) shows improved chloramine removal from fluid streams, when the fluid stream is contacted with an activated carbon, which has been pyrolyzed in the presence of nitrogen-containing molecules, versus a catalytically-active carbonaceous char.

WO Publ. No. 2011/125504 (Hitomi et al.) discloses an activated carbon containing 1.40-4.30 mass % oxygen, 0.90-2.30 mass % nitrogen, 0.05-1.20 mass % sulfur, and 0.40-0.65 mass % hydrogen, which is said to effectively break down chloramines. Hitomi et al. discloses that if the amounts of these elements are too high, the catalytic activity of the activated carbon will be diminished.

US 2004/0124152 A1 deals with catalytic activated carbon for removal of chloramines from water. US 6,342,129 B1 deals with the production of catalytically active carbonaceous char.

## SUMMARY

There is a desire to provide a filtration medium, which is less expensive, and/or more efficient at the removal of chloramine than currently available filtration media. In some instances, it is desirable to identify filtration media that is able to be used effectively in applications requiring high throughput and short contact time between the aqueous stream and the filtration bed.

The present invention provides a method for removing chloramine from aqueous solutions as defined in the claims.

The above summary is not intended to describe each embodiment. The details of one or more embodiments of the invention are also set forth in the description below. Other features, objects, and advantages will be apparent from the description and from the claims.

## DESCRIPTION OF THE FIGURES

Fig. 1 is a chart of the percent chloramine reduction versus time for Comparative Examples A-B, and Examples 1-2.
Fig. 2 is a chart of the percent chloramine reduction versus time for Comparative Examples B-C and Example 2.
Fig. 3 is a chart of the effluent versus throughput for Comparative Examples D and E and Example 4.
Fig. 4 is a chart of the effluent versus throughput for Comparative Examples D and F and Example 4 at various flow rates, Fig. 4a is with a 0.5 l/min (0.13 gallons/min), Fig. 4b is with a 0.98 l/min (0.26 gallons/min), and Fig. 4c is with a 1.4 l/min (0.38 gallons/min).
Fig. 5 is a chart of the percent chloramine reduction versus time for Examples 5-6.
Fig. 6 is a chart of the percent chloramine reduction versus time for Comparative Example G and Examples 7-8.
Fig. 7 is a chart of the effluent versus throughput for Comparative Examples H and Example 4.

## DETAILED DESCRIPTION

As used herein, the term

"a", "an", and "the" are used interchangeably and mean one or more; and

"and/or" is used to indicate one or both stated cases may occur, for example A and/or B includes, (A and B) and (A or B).

Also herein, recitation of ranges by endpoints includes all numbers subsumed within that range (e.g., 1 to 10 includes 1.4, 1.9, 2.33, 5.75, 9.98, etc.).

Also herein, recitation of "at least one" includes all numbers of one and greater (e.g., at least 2, at least 4, at least 6, at least 8, at least 10, at least 25, at least 50, at least 100, etc.).

The present invention is directed to a method as described in the claims for removing chloramine from aqueous solutions comprising: providing an active chloramine material, providing an aqueous solution comprising chloramine, and contacting the aqueous solution with the active chloramine material. The active chloramine removal material comprises carbon, nitrogen, and sulfur wherein the sum of the sulfur and nitrogen in the active chloramine removal material is at least 4.0 mass %.

It has indeed been discovered that filtration media comprising carbon, nitrogen, and sulfur in appreciable amounts are effective in removal of chloramines from aqueous solutions. In one embodiment, such filtration media have a high capacity.

In one embodiment, the active chloramine removal material comprises $CN_pS_r$, wherein p and r are independently greater than 0. In one embodiment, p can be greater than 0.004, 0.008, 0.013, 0.020, 0.025, 0.035, 0.045, 0.065, or even 0.10, and r can be greater than 0.004, 0.006, 0.008, 0.015, 0.025, 0.035, or even 0.42.

The sulfur is present in amounts greater than 1.2, 1.3, 1.5, 1.8, 2.0, 4.0, 6.0, 8.0, 10.0, or even 12.0 mass % sulfur based on the total mass of the active chloramine removal material.

The nitrogen is present in amounts greater than 0.5, 1.0, 1.5, 2.0, 2.4, 2.5, 2.7, 3.0, 4.0, 5.0, 7.0, or even 10.0 mass % nitrogen based on the total mass of the active chloramine removal material.

The active chloramine removal material comprises more than 4.0, 4.5, 5.0, 7.0, 9.0, 10.0, 12.0, 15.0, or even 22.0 mass % of the sum of nitrogen and sulfur based on the total mass of the active chloramine removal material.

In one embodiment, when the active chloramine removal material comprises sulfur, at least 15%, 20%, 25%, 30%, or even 50% of the sulfur in the active chloramine removal material is in an oxidation state higher than 0. For example in a +1, +2, +4, or even +6 oxidation state. Because the active chloramine removal material of the present disclosure comprises greater than 1.2% by mass of sulfur, in one embodiment, at least 0.2%, 0.5%, or even 1% by mass of the medium comprises sulfur in an oxidation state higher than 0 based on XPS surface analysis..

In one embodiment, the active chloramine removal material is substantially free of hydrogen, comprising less than 0.40, 0.30, 0.20, 0.10, 0.05, or even 0.01 mass % hydrogen based on the total mass of the active chloramine removal material.

In one embodiment, the active chloramine removal material is substantially free of metals, in other words, comprising less than 1, 0.5, 0.1, or even 0.05 mass % of metal based on the total mass of the active chloramine removal material.

In one embodiment, metals (such as calcium, magnesium, iron, etc.) may be present in low levels in the active chloramine removal material due to low levels of metals intrinsic to plant-derived materials such as carbons made from nut shells or coal.

The active chloramine removal material of the present disclosure is a thermal reaction product of the surface of a carbonaceous solid (e.g., a carbon-based support) and a nitrogen containing chemical species and a sulfur containing chemical species.

In one embodiment, compound(s) comprising the nitrogen containing chemical species and/or the sulfur containing chemical species have a molecular weight of no more than 800, 600, 500, 400, or even 200 grams/mole. The molecular weight of the compound needs to be appropriate for the nature of the carbon-based support used.

In one embodiment, the nitrogen containing chemical species and a sulfur containing chemical species are the same compound.

In one embodiment, the nitrogen containing chemical species and a sulfur containing chemical species is a salt.

In one embodiment, the salt is represented by the formula $[C]^{+y}{}_x[A]^{-x}{}_y$, wherein [C] is a cation; [A] is an anion; and x and y are independently at least 1. These salts include at least one sulfur atom and at least one nitrogen atom.

In one embodiment, the cation is a conjugate acid of a nitrogen-containing base and contains at least one nitrogen atom. Exemplary cations include: ammonium and alkylated or arylated derivatives thereof (e.g., $(NH_4)^+$, $(NH_3CH_3)^+$, etc.), guanidinium, imidazolium, morpholinium, anilinium, thiomorpholinium, pyridinium, and combinations thereof.

In another embodiment, the cation contains at least one sulfur atom. Exemplary cations include: trimethylsulfonium, trimethylsulfoxonium, and combinations thereof.

In yet another embodiment, the cation contains at least one sulfur atom and at least one nitrogen atom. An exemplary cation includes phenothazinium.

In one embodiment, the anion contains at least one sulfur atom. Exemplary anions include: sulfate, bisulfate, sulfite, bisulfate, polysulfide, sulfamate, polythionates [i.e. $Sx(SO_3)_2^{2-}$], and combinations thereof.

In another embodiment, the anion contains at least one nitrogen atom. Exemplary anions include: cyanate, guanidine, imidazole, pyridine, triazole, and combinations thereof.

In yet another embodiment, the anion contains at least one sulfur atom and at least one nitrogen atom. Exemplary anions include: thiosulfate, thiocyanate, and combinations thereof.

In one embodiment, the salt may be a metal containing salt, e.g., potassium thiocyanate or sodium thiocyanate.

In another embodiment, the active chloramine removal material is a thermal reaction product of a sulfur- and nitrogen-containing material and a carbon-based support. Exemplary sulfur and nitrogen-containing materials include: thiomorpholine, phenothiazine, 2-mercaptopyridine, thiourea, and combinations thereof.

In another embodiment, an active chloramine removal material may be made using a hydrothermal process to produce a sulfur and nitrogen doped carbon as described in Wohlgemuth, et al. in Green Chemistry, 2012, 14, 741 and 1515.

The nitrogen containing chemical species and a sulfur containing chemical species are thermally treated in the presence of a carbonaceous solid (or carbon-based support) to form the active chloramine removal material. The active chloramine removal material is a thermal reaction product of (i) the surface of the carbon-based support and (ii) the nitrogen containing chemical species and a sulfur containing chemical species (e.g., a product of the thermal decomposition of the salts disclosed herein).

The nitrogen containing chemical species and a sulfur containing chemical species is combined with a carbon-based support and reacted in the presence of heat to form the support. The carbon-based support may be a granular material, a powder material, a fiber, a tube, a web or a foam.

In one embodiment, it is preferable for the carbon-based support is porous. The porous nature will enable, for example, more surface area for chloramine removal. Preferably the carbon-based support has a high surface area (e.g., at least 100, 500, 600 or even 700 $m^2$/g; and at most 1000, 1200, 1400, 1500, or even 1800 $m^2$/g based on BET (Brunauer Emmet Teller method) nitrogen adsorption). High surface areas may be made available using a highly porous carbon substrate such as an activated carbon substrate.

The morphology of the carbon-based support is not particularly limited and may include a non-particulate, a particulate, or an aggregate. Additional exemplary morphologies include: a carbon block, a carbon monolith, foams, films, fibers, nanoparticulates, such as nanotubes and nanospheres. A non-particulate carbon-based support is a support that is not composed of discernable, distinct particles. A particulate carbon-based support is a support that has discernable particles, wherein the particle may be spherical or irregular in shape (including e.g., non-spherical, cubic, faceted particles, and/or other geometric shapes) and has an average diameter of at least 0.1, 1, 5, 10, 20, or even 40 micrometers ($\mu$m) to at most 75 $\mu$m, 100 $\mu$m, 500 $\mu$m, 1 millimeter (mm), 2 mm, 4mm, 6.5 mm, or even 7 mm. An aggregate (or a composite) is formed by the joining or conglomeration of smaller particles with one another or with larger carrier particles or surfaces. The aggregates may be free standing (self-supporting against gravity).

Typically, the morphology the carbon-based support will be selected based on the application. For example, particulate with a large particle size is desirable when the supports of the present disclosure are used in applications requiring low pressure drops such as in beds through which gases or liquids are passed. In another example, particle sizes of about 20 to 200 $\mu$m may be preferable when used in a carbon block monolith.

The size of the pores of the carbon-based support can be selected based on the application. The carbon-based support may be microporous carbon, macroporous carbon, mesoporous carbon, or a mixture thereof.

In one embodiment, the carbon-based support is comprised of activated carbon, in other words carbon that has been processed to make it highly porous (i.e., having a large number of pores per unit volume), which thus, imparts a high surface area.

Commercially available carbon-based supports include: granular activated carbon available under the trade designation "RGC" by Mead Westvaco Corp, Richmond, VA may be preferred in water treatment. Activated coconut carbon available under the trade designation "KURARAY PGW" by Kuraray Chemical Co., LTD, Okayama, Japan may also be used.

The thermal treatment of the carbon-based support and the nitrogen containing chemical species and the sulfur containing chemical species must be done a temperature sufficient to thermally decompose the nitrogen and sulfur chemical species (if necessary) as well as enable their reaction with the carbon-based support. Exemplary temperatures include at least 300, 350, 400, 450, or even 500°C; and at most 650, 700, 800, 900, or even 1000°C.

The thermal treatment may be conducted in an air environment. However, to prevent combustion, sources of oxygen, such as air or water, may be excluded (e.g., by pulling a vacuum) or replaced by an inert gas such argon or nitrogen in which the oxygen concentration is less than 2000 ppm (parts per million), 200 ppm, or even less than 50 ppm.

In one embodiment, the nitrogen containing chemical species and the sulfur containing chemical species may be combined with the carbon-based support by dry mixing and then exposed to the thermal treatment (heated). The amount of chemical species added to the carbon support is determined through experimentation to yield sufficient nitrogen and sulfur present in the end product to produce an active chloramine removal material

In another embodiment, the nitrogen containing chemical species and the sulfur containing chemical species may be dissolved in a solvent (e.g., water or methanol or mixtures of solvents) and the solution is used to wet the carbon-based support, impregnating the carbon-based support with the salt. Then, the impregnated carbon-based is heated to generate the support of the present disclosure. The nitrogen containing chemical species and the sulfur containing chemical species is dissolved in the solvent to its solubility limit to maximize the amount of nitrogen and sulfur present, although lesser amounts may be used so long as there is sufficient nitrogen and sulfur present in the end product to produce an active chloramine removal material.

It is believed that the use of water soluble salts, such as those comprising at least one nitrogen atom and at least one sulfur atom, offers advantages. The water soluble salts can be used to impregnate the carbon-based support. Such impregnation can be accomplished using simple techniques, such as spraying the aqueous salt solution onto the carbon-based support. The decomposition of the salt on the surface of the carbon-based support is thought to produce a reactive sulfur and a reactive nitrogen species. It is thought that the impregnation of a water soluble salt would enable a more evenly dispersed reactive surface on the carbon-based support, yielding a more uniform and better performing chloramine removal medium.

Combustion analysis may be conducted to determine how much carbon, hydrogen, nitrogen, and sulfur, the active chloramine removal material of the present disclosure comprise.

Because of the ability of the compositions of the present disclosure to remove chloramine, the active chloramine removal material of the present disclosure may be used as a filtration media. Filtration methods as known in the art can be used.

In one embodiment, the active chloramine removal material is disposed in a matrix. The matrix may be a web, a polymer-containing composite block, on the surface of a tube, or in another structure that enables aqueous solutions to pass therethrough. In one embodiment, the filtration medium may be a compressed blend of the active chloramine removal material and a binder material, such as a polyethylene, e.g., an ultra high molecular weight polyethylene, or a high-density polyethylene (HDPE). In another embodiment, the active chloramine removal material may be loaded into web, such as a blown microfiber, which may or may not be compacted such as described in U.S. Publ. No. 2009/0039028 (Eaton et al.).

The loading, expressed as weight of the active chloramine removal material by the total weight of the filtration media, can vary depending on matrix used. In one embodiment, the amount of active chlormaine removal material comprises is at least 10, 25, 40, 50, 60, 75, or even 80 %; at most 90, 92, 95, 97, or 99%, or even 100% mass of the filtration media. For example, when carbon blocks are used, the filtration media may comprise about 50-85% mass of the active chloramine removal material, while for a carbon loaded web, the filtration media may comprise about 80-95% mass of the active chloramine removal material.

In one embodiment, the active chloramine removal material is disposed in a fluid conduit (or housing), wherein the fluid conduit is fluidly connected to a fluid inlet and a fluid outlet. Such systems may include packed beds.

In one embodiment, the chloramine removal material may be used to remove chloramines from a fluid stream, particularly a liquid fluid stream, more specifically, an aqueous fluid stream. Chloramines are formed from the aqueous reaction between ammonia and chlorine (hypochlorite). Thus, adding ammonia ($NH_3$) to a chlorination system converts chlorine to chloramines. Specifically, monochloramine, hereafter referred to as "chloramine," in low concentrations arise from the disinfection of potable water sources. In one embodiment, after contacting the aqueous solution with a support comprising a carbon, sulfur, and nitrogen, as disclosed herein, the resulting aqueous solution comprises a reduced amount of chloramines.

In one embodiment, the filter media made using the support of the present disclosure has a high capacity for removing chloramine (e.g., at least 0.1 g/cc, 0.2 g/cc based on the amount of chloramine removed per volume of active chloramine removal material). The capacity, and thus throughput of water, is a key for designing a filter with an acceptably long service life.

Capacity of the carbon block sample is reported as the throughput attained before the concentration of chloramines in the effluent rises above 0.5 mg/L. In one embodiment, the active chloramine removal material has a capacity of greater than 757, 946, 1135 or even 1324 liters (200, 250, 300, or even 350 gallons) when run at a 4.8 second EBCT. In one embodiment, the active chloramine removal material has a capacity of 662, 757, 946 or even 1135 liters (175, 200, 250, or even 300 gallons) when run at a 3.3 second EBCT.

In designing filtration media, it is also advantageous to have media that is able to quickly react with the contaminant of interest. It has been found that filtration media made using the support disclosed herein provides a fast reaction rate, and thus yields good performance for the removal of chloramines with empty bed contact times as low as 3 to 5 seconds. Empty bed contact time is defined as the volume of the filter in liters (gallons) divided by the water flow rate in liters (gallons) per second. The ability to quickly and effectively remove chloramines is a key to reducing the required size of filters. In many applications space is limited, so "miniaturizing" filter volume is a key for customer acceptance. Applications where space is limited include refrigerator filters, end of faucet filters, countertop filters, filters for portable and home dialysis systems, gravity flow devices (pitchers) and point-of-entry house filters. Therefore, the media disclosed herein can extend the range of applications where chloramine removal from water is feasible and desirable for the customer. Currently, chloramine filters for the above mentioned applications would be too large or too low in capacity to be practical for a broad range of users.

The active chloramine material as disclosed herein may be useful for the removal of chloramine in aqueous streams for the following applications: point-of-use or point-of-entry filters for home or commercial use, and filters for dialysis water.

## EXAMPLES

Advantages and embodiments of this disclosure are further illustrated by the following examples, but the particular materials and amounts thereof recited in these examples, as well as other conditions and details, should not be construed to unduly limit this invention. In these examples, all percentages, proportions and ratios are by weight unless otherwise indicated.

All materials are commercially available, for example from Sigma-Aldrich Chemical Company; Milwaukee, WI, or known to those skilled in the art unless otherwise stated or apparent.

These abbreviations are used in the following examples: g = gram, hr = hour, in = inch, kg = kilograms, min = minutes, mol = mole; M = molar, cc = $cm^3$, cm= centimeter, mm = millimeter, ml = milliliter, L = liter, N = normal, psi=pressure per square inch, MPa = megaPascals, and wt = weight.

## Testing Methods

### Apparent Density Determination

The apparent density of a sample (prepared according to Comparative Examples or the Examples according to the disclosure) was determined by tapping a weighed sample in a graduated cylinder until closest packing was achieved. The closest packing was deemed to occur when tapping did not produce a further decrease in volume of the carbon substrate sample.

### Chloramine Test

The chloramine content of water samples was determined from the total chlorine content in the samples. Total chlorine ($OCl^-$ and chloramines) concentration was measured by the DPD Total Chlorine Method, Hach Method 8167, which Hach Company claims to be equivalent to USEPA Method 330.5. The free chlorine (OCl-) concentration was periodically measured by the DPD Free Chloramine Analysis, Hach Method 8021, which Hach company claims is equivalent to EPA Method 330.5. Free chlorine was maintained at a negligible concentration (< 0.2 ppm), thus, the total chlorine analysis was considered a good approximation of the concentration of chloramines in the water. All reagents and the instruments were those described in the standard Hach Method and can be obtained from Hach Company, Loveland, CO.

### Chloramine Preparation

3 ppm chloramine was prepared by adding the appropriate amount of commercial bleach (5.25% NaOCl) to deionized water. While stirring, 1.5 equivalents of a solution of ammonium chloride in water was added to the bleach solution and stirred for 1 hour. The pH was adjusted to 7.6 by the addition of NaOH or HCl and tested using a pH meter (obtained from Thermo Fisher Scientific, Inc., Waltham, MA, under the trade designation "ORION 3-STAR").

### Chloramine Removal Test

An aqueous chloramine test solution was prepared comprising 3 ppm $NH_2Cl$ (prepared as described above) at a pH 7.6 at 27°C. Immediately prior to the test, the initial total chlorine content of the aqueous chloramine test solution was measured as described in the Chloramine Test above. With continuous stirring, a 1.5 $cm^3$ aliquot of a carbon substrate sample (i.e. a sample prepared according to Comparative Examples or the Examples according to the disclosure) was added to the aqueous chloramine test solution. Samples were compared on a volume basis because the application is for a fixed volume filter and carbon substrates varied widely in apparent density. Immediately after mixing, a timer was started. After 30 sec, a 25 mL-aliquot of mixture was removed and within 5 sec of removal, the mixture was passed through a 1-micrometer syringe filter to remove suspended solids. The chloramine content of the filtered aliquot was measured within 30 sec of taking the 25-mL aliquot as described above. Aliquots from the mixture were taken periodically (every 30 seconds) over the course of 3 minutes and analyzed using the Chloramine Test as described above. The efficiency of the chloramine removal is reported as the % chloramine reduction determined by the equation:

$$\left(1 - \frac{[NH2Cl]\,filtered\,aliquot}{[NH2Cl]\,initial}\right) \times 100$$

**Chloramine Removal Test 2** Chloramine capacity in a flow-through system was evaluated per a method based on the NSF/ANSI Standard 42 (Drinking Water Treatment - Aesthetic Effects) for chloramine reduction. A 3 mg/L aqueous chloramine test solution was prepared having a pH of 7.6 total dissolved solids of 200-500 mg/L; a hardness less than 170 mg/L as CaCO3; turbidity of less than 1 Nephelometric Turbidity Units; and a temperature of 20 ± 3°C. The chloramine concentration was controlled at 2.7 - 3.3 mg/L by the addition of a sodium hypochlorite solution and then addition of an ammonium chloride solution. The pH was controlled by adding sodium hydroxide as needed.

An end-blocked carbon sample was then placed into a standard filtration vessel that allowed radial flow from the outside to the inside of the filter media. The vessel was equipped with an inlet and outlet. The aqueous chloramine test solution was run through the filtration system at a given flow rate. In this test, the water flow rate was held constant during the test to give an accelerated test; that is, there was no duty cycle or shutdown period as prescribed in the NSF standard.

The aqueous chloramine test solution described above was flowed through the filtration system for 5 minutes to wet out the carbon block sample. After this, samples of the effluent (outflow from the carbon block sample) were taken periodically and the throughput in gallons was recorded. Effluent samples were analyzed for chloramine using the Chloramine Test described above. The chloramine effluent concentration was then plotted as a function of the aqueous chloramine test solution throughput. The maximum effluent chloramine concentration per NSF 42 is 0.5 mg/L. Capacity of the carbon block sample is reported as the throughput attained before the concentration of chloramines in the effluent rises above 0.5 mg/L.

## Analysis of Hydrogen, Nitrogen and Sulfur

The weight percent carbon, hydrogen, nitrogen and sulfur in a sample was measured by combustion using a LECO TruSpec Micro CHNS elemental analyzer, Laboratory Equipment Co. St. Joseph, MI. Briefly, the sample is placed in the instrument and purged of atmospheric gases. The sample is then heated to over 1000°C in the presence of oxygen to combust the sample. The sample is then passed through a second furnace for further oxidation, reduction, and particulate removal. The combustion gases are then passed through various detectors to determine the content of the carbon, hydrogen, nitrogen, and sulfur.

A sulfamethazine standard (>99%, from LECO) was diluted to make a calibration curve ranging from 1 mg to 2.6 mg sulfamethazine. The instrument is baselined with ambient air until the CHNS detectors stabilized. Then, 3-4 empty crucibles were measured and set as instrument blanks. Next, the sulfamethazine standards were analyzed to form a calibration curve. The absolute standard deviation of the sulfamethazine standard (acceptable precision for a pure homogeneous material) for the elements were: < +/- 0.3 wt % for hydrogen, < +/- 0.3 wt % for nitrogen and < +/- 0.3 wt. % for sulfur with a limit of detection of 0.10 wt % for each of the elements.

## XPS Surface Analysis

Chemical states and elemental compositions of a sample were analyzed by X-ray photoelectron spectroscopy, using a Kratos Axis Ultra™ XPS system (Shimadzu Corp., Columbia, MD) at a base pressure below $10^{-9}$ Torr. The monochromatic AlK$\alpha$ (1486.6 eV) X-ray source was operated at 140 Watts (14 KV, 10 mA). Hemispherical electron energy analyzer operated at constant pass energy of 160 eV for survey and 20 eV for high resolution spectra. The binding energy (BE) scale was calibrated relative to the BE of C 1s peak. The spectra were acquired at 90 ° take-off angle with respect to the sample surface. The data processing was done with PHI MultiPak V8. 2B, 2006 and Casa XPS Version 2.3.16 Dev41 software. Surface compositions were calculated from measured photoelectron peak areas in survey spectra after correction for appropriate Scofield ionization cross sections. The reported overall atomic concentrations are mean values derived from the survey spectra collected at multiple randomly selected sample regions. The surface content of catalyst functional groups was determined by de-convolution/curve fitting analysis of C 1s, O 1s, N 1s and S 2p core level spectra. The curve fitting analysis was based on summed Gaussian/Lorentzian GL function and Shirley type background subtraction.

## Substrates

Substrate A was an activated carbon powder with an ash content of 2.9 wt% (obtained under the trade designation "RGC POWDER" (-325 mesh) from MeadWestvaco Specialty Chemicals, North Charleston, SC) used as received without further treatment.

Substrate B was a powdered activated carbon, , obtained under trade designation "MEADWESTVACO AQUAGUARD POWDER" (obtained from MeadWestvaco Specialty Chemicals, North Charleston, SC) used as received without further treatment.

Substrate C was an activated carbon obtained under the trade designation "RGC 325" (80x325 mesh) from MeadWestvaco Specialty Chemicals, North Charleston, SC) used as received without further treatment.

Substrate D was an activated carbon obtained under the trade designation "MEADWESTVACO AQUAGUARD 325" (80x325 mesh) from MeadWestvaco Specialty Chemicals, North Charleston, SC) used as received without further treatment.

Substrate E was an activated carbon obtained under the trade designation "PKC-50MP" from Kuraray Chemical, Osaka Japan. The carbon was screened to 80x325 mesh using standard screens to ensure a particle size similar to that used in other comparative samples and to enable carbon blocks to be made without excessive pressure drop. Substrate E was tested following the "Analysis for Hydrogen, Nitrogen and Sulfur" method listed above. Substrate E had 0.5 wt% sulfur, 0.7 wt % nitrogen and 0.4 wt % hydrogen.

## Example 1

A saturated solution of ammonium sulfate ($(NH_4)_2SO_4$, BDG ACS Grade 7783-20-2, 99.9% pure), in water prepared at 82°C was added to Substrate A to the point of insipient wetness. A small amount (~2 g) of the impregnated carbon was transferred to a crucible with a loose-fitting lid. The crucible was then heated in a nitrogen-purged muffle furnace at 900°C for 10 minutes. The crucible was then transferred to a nitrogen-purged container for cooling to near room temperature.

## Example 2

Example 2 was prepared in the same manner as Example 1 except that a saturated solution of ammonium thiosulfate ($(NH_4)_2S_2O_3$, obtained from Alfa Aesar, Ward Hill, MA, A10190, 99% pure), prepared in water at 82°C was used in place of the ammonium sulfate. Example 2 was tested following the "Analysis for Hydrogen, Nitrogen and Sulfur" method listed above. Example 2 had 10.37 wt % sulfur and 1.05% nitrogen. The hydrogen content was below the limit of detection (< 0.10% wt).

## Comparative Example A

Comparative Example A was prepared in the same manner as Example 1, except that a saturated solution of urea (obtained from EMD Chemicals, UX 0065-1, EMD ACS grade), prepared in water at 82°C was used in place of the ammonium sulfate.

## Comparative Example B

Comparative Example B was Substrate B used as received without further treatment.

## Comparative Example C

Comparative Example C was prepared by first heating Substrate A to 180°C in an oven. Elemental sulfur powder was added with stirring to the heated carbon in the amount of 0.20 gram S/ gram carbon. The carbon sulfur mixture was then heated to 550 °C in a muffle furnace that was purged with nitrogen. Heating time was 10 minutes. The sample was cooled to room temperature under nitrogen purge.

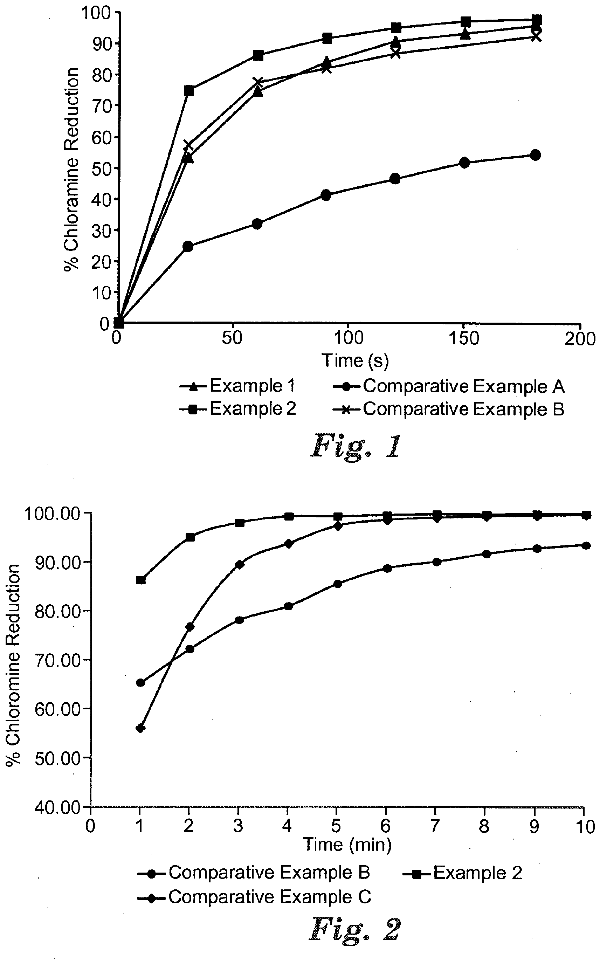

Examples 1 and 2 and Comparative Examples A and B were tested for their % chloramine reduction as a function of time using the Chloramine Removal Test described above. The results are shown in Fig. 1.

Chloramine reduction performance of Example 2 and Comparative Examples B and C were determined using a modified version of the Chloramine Removal Test method. The modified test method was identical to the Chloramine Removal Test, described above except that the initial chloramine concentration was increased to 6 ppm (instead of 3 ppm) and the reaction time was extended to 10 minutes. These conditions allowed more contrast in activity and capacity measurements between samples. The % chloramine reduction as a function of time for these samples is shown in Fig. 2.

### Example 3

A saturated solution of ammonium thiosulfate ($(NH_4)_2S_2O_3$, obtained from Alfa Aesar, Ward Hill, MA, A10190, 99% pure), prepared in water at 82°C was added to Substrate C to the point of insipient wetness. 40 g of the impregnated carbon (Substrate C with ammonium thiosulfate) was transferred to a crucible with a loose-fitting lid. The crucible was then heated in a nitrogen-purged muffle furnace at 800 °C for 30 minutes. The crucible was then transferred to a nitrogen-purged container for cooling to near room temperature.

### Example 4

40 $cm^3$ of Example 3 was added into a blender. The volume of Example 3 was determined at the maximum uncompressed density. 40 cc of ultra high molecular weight polyethylene (UHMWPE) powder (available under the trade designation "GUR UHMW-PE 2126" from Ticona North America, Florence, KY) at its maximum uncompressed density was measured and placed into the blender. Example 3 and UHMWPE were blended for 3 minutes. The mixture was then quantitatively transferred to a cylindrical shaped mold with a hollow cylindrical core having the dimensions of 1.35 in. (34.3mm) outer diameter, 0.375 in.(9.5mm) inner diameter, and 3.6 in. (91.4 mm) length. The mold was filled using an impulse filling as described in U.S. Pat. No. 8,206,627 (Stouffer et al.) to maximum uncompressed density. The mold was covered and then heated in a convection oven at 180°C for 50 minutes. After heating, the mold was immediately compressed with a piston to a fixed block length of 3.1in. (78.7 mm). The mold was cooled to room temperature and the resulting carbon block was removed from the mold. End caps were applied to the carbon block using a hot melt glue to form an end-blocked carbon sample.

### Comparative Example D

Comparative Example D was prepared in the same manner as Example 4, except that 40 cc of Carbon Substrate D was used in place of Example 3.

### Comparative Example E

Comparative Example E was prepared in the same manner as Example 4, except that 40 cc of Substrate C was used in place of Example 3.

### Comparative Example F

Comparative Example F was prepared in the same manner as Example 4, except that 40 cc of a sulfide carbon (described below) was used in place of Example 3.

Sulfided carbon: Substrate C was heated to 180°C in an oven. Elemental sulfur powder was added with stirring to the heated carbon in the amount of 0.20 gram S/ gram carbon. The carbon sulfur mixture was then heated to 550 °C in a muffle furnace that was purged with nitrogen. Heating time was 10 minutes. The sample was cooled to room temperature under nitrogen purge.

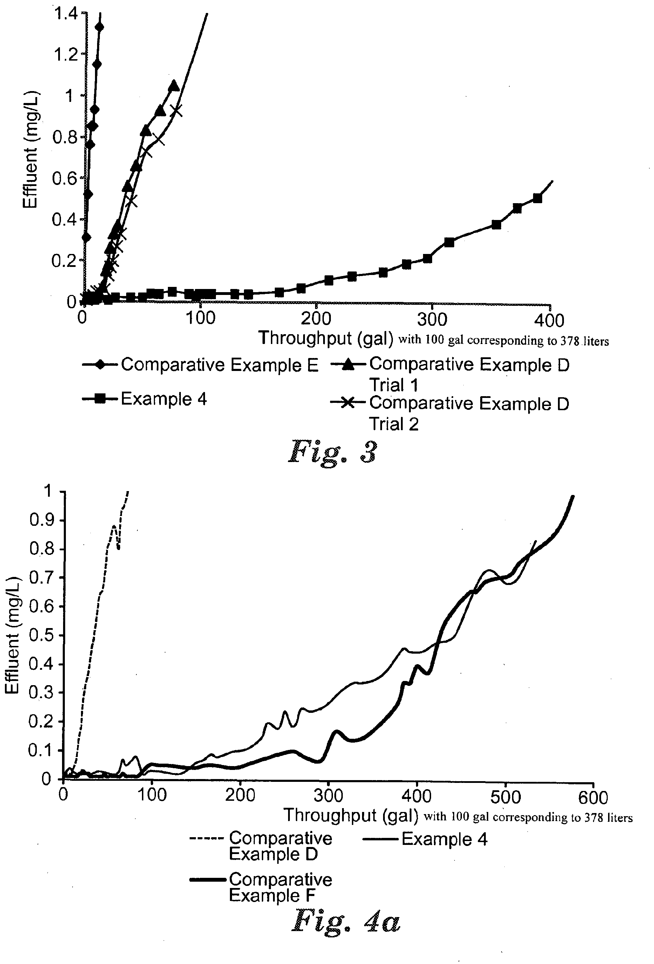

The ability of the sample to remove chloramines from large quantities of water was evaluated. Example 4 and Comparative Examples D -E were evaluated following the Chloramine Removal Test 2 above with a flow rate of 0.5 liters/min (0.13 gallons/min), which gave a fixed empty bed contact time (EBCT, volume carbon block/volume flow rate of water) of 9.6 s. Influent chloramine concentration was maintained at 3 ppm. The effluent chloramine concentration was measured as a function of gallons treated and graphically summarized in Fig. 3. Note: Two different trials (runs) of Comparative Example D were performed to show the reproducibility between samples.

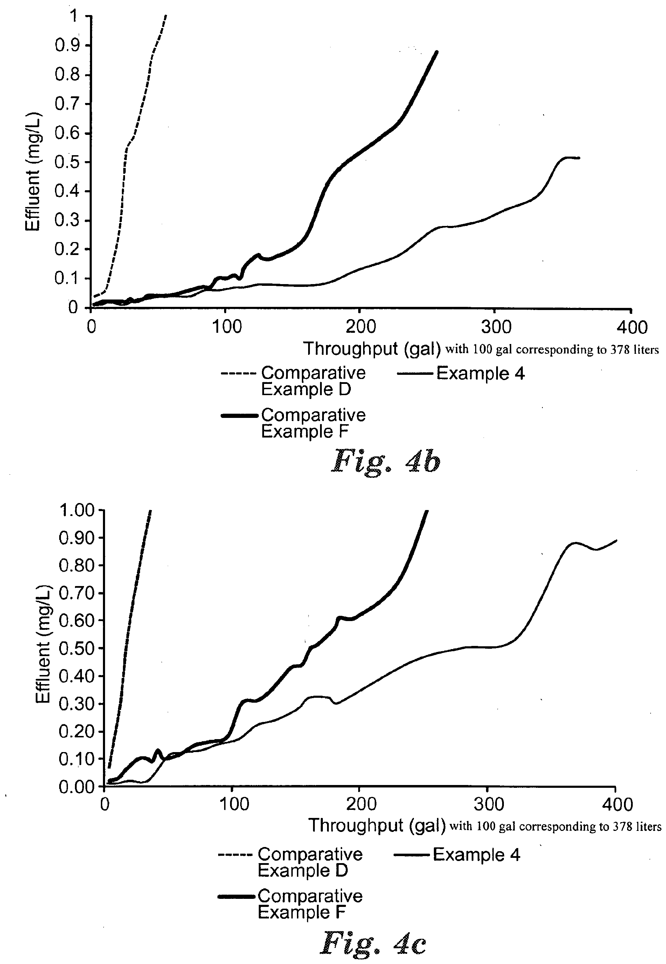

Example 4 and Comparative Examples D and F were evaluated at three different flow rates (and thus 3 different EBCT) to examine how the contact time impacted performance following the Chloramine Removal Test 2 above. Influent chloramine concentration was maintained at 3 ppm. Shown in Table 1 below are the three different flow rates used. Fig. 4a is with a 9.5 second EBCT, 4b is with a 4.8 second EBCT, and Fig. 4c is with a 3.3 second EBCT.

Table 1

| Water Flow Rate, liters per minute (gallons per minute) | | Empty Bed Contact Time (EBCT, sec) |
|---|---|---|
| 0.5 | (0.13) | 9.5 |
| 0.98 | (0.26) | 4.8 |
| 1.4 | (0.38) | 3.3 |

## Example 5

3.6 gram of potassium thiocyanate (KSCN, obtained from Sigma Aldrich Chemical Company, St. Louis, MO, Lot 050M0073V) was physically admixed with 1 gram of Substrate A carbon. The mixture was heated to 525 °C in nitrogen for 30 minutes. The sample was cooled in nitrogen.

## Example 6

0.2 gram of KSCN was physically admixed with 1 gram of Substrate A carbon. The mixture was heated to 525 °C in nitrogen for 30 minutes. The sample was cooled in nitrogen.

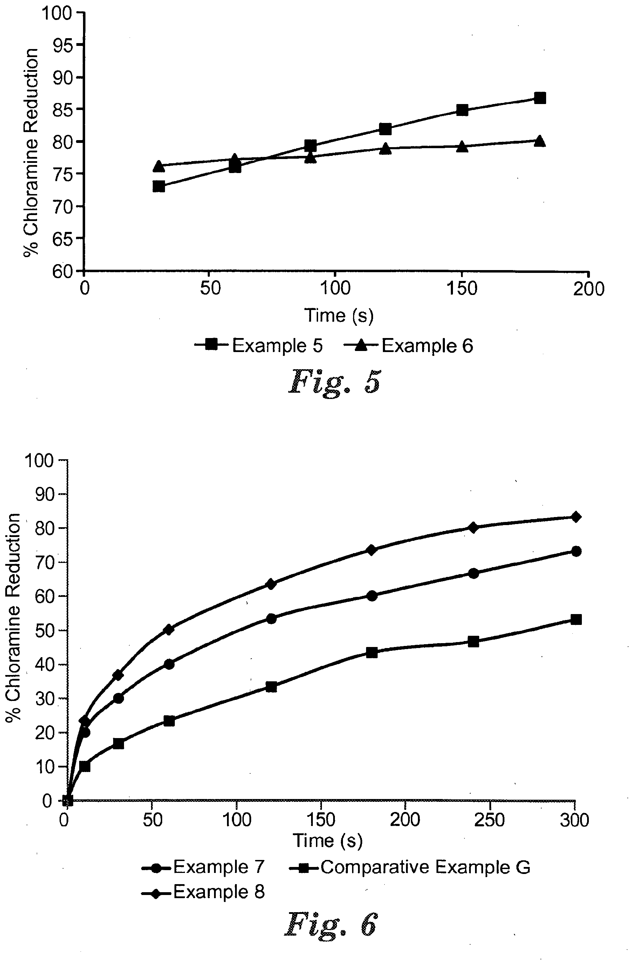

Example 5 and 6 were tested for their chloramine reducing performance using the Chloramine Removal Test described above. The data is graphically presented in Fig. 5.

## Comparative Example G

Comparative Example G was Substrate A used as received without further treatment.

## Example 7 (outside of the scope of the invention)

Guanidinium sulfamate was prepared by adding in small portions, 77.6 gm solid sulfamic acid to a stirred solution of 20 gm guanidinium carbonate in 100 mL water. The reaction mixture was filtered and the water removed on a rotary evaporator. Last traces of water were removed at 90°C using a mechanical vacuum pump to give 55 g (85%) of white crystalline product. *Anal.* Calcd (found) for $CH_8N_4O_3S$: C, 7.7 (7.8); H, 5.2 (5.0); N 35.9 (35.9); S, 20.5 (21.6)%.

A solution of 3.2 g guanidinium sulfamate from above in 25 mL water was mixed with 10.0 gm powdered Substrate A carbon. The mixture was dried in a 130°C oven to remove water, then placed in a quartz tubular reactor fitted with a vacuum stopcock. The solid was outgassed by pumping for 30 min. The reactor was backfilled to 1 atmosphere (101.2 KPa) with nitrogen then heated at 700°C for 1 hr. After cooling, volatiles were removed on a vacuum line via a trap cooled with liquid nitrogen. The product, after standing overnight in air, weighed 8.8 gm. *Anal.* N, 1.8%; S, 1.2% (outside of the scope of the invention).

## Example 8

10.0 gm powdered Substrate A carbon was impregnated with 4.3 g guanidinium sulfate (obtained from Eastman Chemicals, Kingsport, TN) in 25 mL water. The impregnated Substrate A carbon was then treated in the same manner as Example 7. The product weighted 9.1 gm. *Anal.* N, 3.4% N; 2.0% S.

Example 7 and 8 and Comparative Example G were tested for their chloramine reducing performance using the Chloramine Removal Test described above. The data is graphically presented in Fig. 6.

## Comparative Example H

In Comparative Example H, was prepared in the same manner as in Example 4, except that 40 cc of Carbon Substrate E was used in place of Example 3.

The ability of the sample to remove chloramines from large quantities of water was evaluated. Example 4 and Comparative Example H were evaluated following the Chloramine Removal Test 2 above with a flow rate of 0.98 liters/min (0.26 gallons/min), which gave a fixed empty bed contact time (EBCT, volume carbon block/volume flow rate of water) of 4.8 s. Influent chloramine concentration was maintained at 3 ppm.

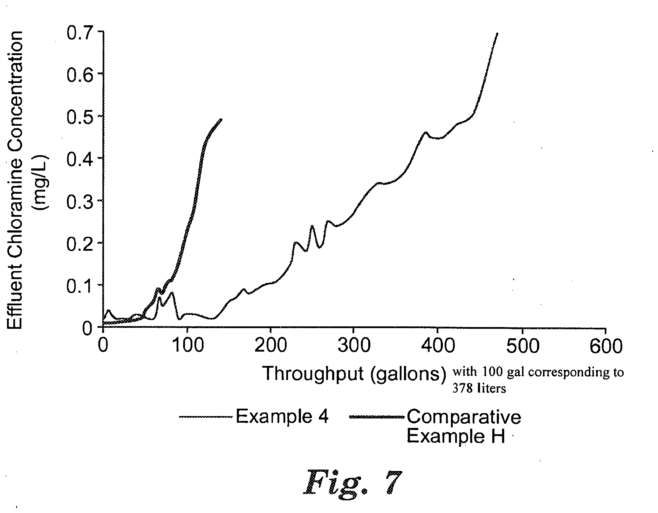

The effluent chloramine concentration was measured as a function of gallons treated and graphically summarized in Fig. 7.

Example 4 and Comparative Example H were also evaluated following the Chloramine Removal Test 2 above with EBCT time of 9.5 seconds. Shown in Table 2 below is the chloramine capacity based on 0.5 ppm breakthrough for both the 9.5 EBCT and 4.8 EBCT.

**Table 2**

| EBCT, sec | Example 4 | Comparative Example H |
|---|---|---|
| 9.5 | 1665 liters (440 gallons) | 530 liters (140 gallons) |
| 4.8 | 1324 liters (350 gallons) | 492 liters (130 gallons) |

**Comparative Example I**

An aqueous chloramine test solution was prepared comprising 3 ppm $NH_2Cl$ at a pH 7.6 at 27°C. Immediately prior to chloramine analysis, the initial total chlorine content of the aqueous chloramine test solution was measured. With continuous stirring, a 0.0105 g of sulfur powder (sublimed, - 100 mesh, 99.5%, Alfa Aesar, Ward Hill, MA) was added to the aqueous chloramine test solution. Immediately after mixing, a timer was started (t = 0). After 30 sec, a 5 mL-aliquot of mixture was removed and within 5 sec of removal, the mixture was passed through a 0.45 $\mu$m syringe filter to remove suspended solids. The chloramine content of the filtered aliquot was measured within 30 sec of taking the 5-mL aliquot. Aliquots from the mixture were taken periodically over the course of 5 minutes and analyzed for chloramine content. As a comparison, 0.46 g of Substrate A was analyzed for chloramine removal with the protocol described for the sulfur. The error of the analysis is +/-0.2 ppm. The results are shown in Table 3.

Table 3

| | Residual Chloramine in ppm | |
|---|---|---|
| Time (s) | Substrate A | Powdered sulfur |
| 0 | 3.1 | 3.0 |
| 30 | 2.7 | 3.1 |
| 60 | 2.2 | 3.3 |
| 120 | 1.9 | 3.1 |
| 180 | 1.7 | 3.1 |
| 240 | 1.5 | 3.0 |
| 300 | 1.3 | 3.1 |

**Claims**

1. A method for removing chloramine from aqueous solutions comprising:

   providing an active chloramine removal material,
   providing an aqueous solution comprising chloramine, and
   contacting the aqueous solution with the active chloramine removal material,
   wherein the active chloramine removal material comprises carbon, greater than 0.5% by mass of nitrogen, and greater than 1.2% by mass of sulfur, wherein the sum of the sulfur and nitrogen in the active chloramine removal material is at least 4.0 mass % based on the total mass of the active chloramine removal material and wherein the active chloramine removal material comprises a product obtainable as the thermal reaction product of a thermal reaction of (i) the surface of a carbon-based support and (ii) a nitrogen containing chemical species and a sulfur containing chemical species, performed at a temperature sufficient to thermally decompose the nitrogen and sulfur chemical species as well as enable their reaction with the carbon-based support.

2. The method of claim 1, wherein during the removal of the chloramine, at least 0.2 % by mass of the sulfur is in an oxidation state higher than 0 based on the total mass of the active chloramine removal material.

3. The method of claim 1 or 2, wherein the temperature is at least 300°C.

4. The method of any previous claim, wherein the nitrogen containing chemical species and the sulfur containing chemical species are the same compound.

5. The method of any previous claim, wherein the nitrogen containing chemical species and the sulfur containing chemical species is a salt having the formula $[C]^{+y}{}_x[A]^{-x}{}_y$, wherein [C] is a cation, [A] is an anion, and x and y are independently at least 1; and further wherein the salt comprises at least one sulfur atom and at least one nitrogen atom.

6. The method of claim 5, wherein the cation is selected from the group consisting of: ammonium and alkylated or arylated derivatives thereof, guanidinium, imidazolium, morpholinium, anilinium, thiomorpholinium, phenothazinium, pyridinium, and combinations thereof.

7. The method of any one of claims 5 or 6, wherein the anion is selected from the group consisting of: sulfate, bisulfate, sulfite, bisulfite, thiosulfate, polysulfide, sulfamate, polythionate, thiocyanate, and combinations thereof.

8. The method of any one of claims 1 to 7, wherein the active chloramine removal material is free of a metal.

9. The method of any one of the previous claims, wherein the active chloramine removal material comprises more than 2.0% by mass of sulfur.

10. The method of any one of claims 1 to 9, wherein the active chloramine removal material comprises greater than 6.0 mass % sulfur.

11. The method of any one of claims 1 to 10, wherein the active chloramine removal material comprises greater than 1.0 mass % nitrogen.

12. The method of any one of claims 1 to 11, wherein the sum of the sulfur and nitrogen in the active chloramine removal material is at least 10.0 mass %.

13. The method of any one of claims 1 to 12, wherein the carbon-based support is an activated carbon.

14. The method of any one of claims 1 to 13, wherein the active chloramine removal material comprises $CN_pS_r$, wherein p and r are independently greater than 0.

15. The method of any one of the previous claims, wherein the active chloramine removal material has a capacity of greater than 757 liters (200 gallons) at a 4.8 second empty bed contact time EBCT.

## Patentansprüche

1. Ein Verfahren zur Entfernung von Chloramin aus wässrigen Lösungen, umfassend: Bereitstellen eines aktiven Chloramin-Entfernungsmaterials,
Bereitstellen einer wässrigen Lösung, die Chloramin umfasst, und
Inkontaktbringen der wässrigen Lösung mit dem aktiven Chloramin-Entfernungsmaterial, wobei das aktive Chloramin-Entfernungsmaterial Kohlenstoff, mehr als 0,5 Massenprozent Stickstoff, und mehr als 1,2 Massenprozent Schwefel umfasst, wobei die Summe des Schwefels und Stickstoffs in dem aktiven Chloramin-Entfernungsmaterial mindestens 4,0 Massenprozent, bezogen auf die Gesamtmasse des aktiven Chloramin-Entfernungsmaterials, beträgt, und wobei das aktive Chloramin-Entfernungsmaterial ein Produkt umfasst, das als thermisches Reaktionsprodukt einer thermischen Reaktion von (i) der Oberfläche eines auf Kohlenstoff basierenden Trägers, und (ii) einer stickstoffhaltigen chemischen Spezies und einer schwefelhaltigen chemischen Spezies, erhalten wird, die bei einer Temperatur durchgeführt wird, die ausreicht, um die stickstoff- und die schwefelhaltige chemische Spezies zu zersetzen und ihre Reaktion mit dem auf Kohlenstoff basierenden Träger zu ermöglichen.

2. Das Verfahren nach Anspruch 1, wobei während der Entfernung des Chloramins mindestens 0,2 Massenprozent des Schwefels in einem Oxidationszustand höher als 0 sind, basierend auf der Gesamtmasse des aktiven Chloramin-Entfernungsmaterials.

3. Das Verfahren nach Anspruch 1 oder 2, wobei die Temperatur mindestens 300 °C beträgt.

4. Das Verfahren nach einem vorhergehenden Anspruch, wobei die stickstoffhaltige chemische Spezies und die schwefelhaltige chemische Spezies die gleiche Verbindung sind.

5. Das Verfahren nach einem vorhergehenden Anspruch, wobei die stickstoffhaltige chemische Spezies und die schwefelhaltige chemische Spezies ein Salz mit der Formel $[C]^{+y}_x[A]^{-x}_y$ ist, worin [C] ein Kation ist, [A] ein Anion ist, und x und y unabhängig mindestens 1 sind; und wobei ferner das Salz mindestens ein Schwefelatom und mindestens ein Stickstoffatom umfasst.

6. Das Verfahren nach Anspruch 5, wobei das Kation ausgewählt ist aus der Gruppe, bestehend aus: Ammonium und alkylierten oder arylierten Derivaten davon, Guanidinium, Imidazolium, Morpholinium, Anilinium, Thiomorpholinium, Phenothazinium, Pyridinium und Kombinationen davon.

7. Das Verfahren nach einem der Ansprüche 5 oder 6, wobei das Anion ausgewählt ist aus der Gruppe, bestehend aus: Sulfat, Bisulfat, Sulfit, Bisulfit, Thiosulfat, Polysulfid, Sulfamat, Polythionat, Thiocyanat und Kombinationen davon.

8. Das Verfahren nach einem der Ansprüche 1 bis 7, wobei das aktive Chloramin-Entfernungsmaterial metallfrei ist.

9. Das Verfahren nach einem der vorhergehenden Ansprüche, wobei das aktive Chloramin-Entfernungsmaterial mehr als 2,0 Massenprozent Schwefel umfasst.

10. Das Verfahren nach einem der Ansprüche 1 bis 9, wobei das aktive Chloramin-Entfernungsmaterial mehr als 6,0 Massenprozent Schwefel umfasst.

11. Das Verfahren nach einem der Ansprüche 1 bis 10, wobei das aktive Chloramin-Entfernungsmaterial mehr als 1,0 Massenprozent Stickstoff umfasst.

12. Das Verfahren nach einem der Ansprüche 1 bis 11, wobei die Summe des Schwefels und des Stickstoffs in dem aktiven Chloramin-Entfernungsmaterial mindestens 10,0 Massenprozent beträgt.

13. Das Verfahren nach einem der Ansprüche 1 bis 12, wobei der auf Kohlenstoff basierende Träger eine Aktivkohle ist.

14. Das Verfahren nach einem der Ansprüche 1 bis 13, wobei das aktive Chloramin-Entfernungsmaterial $CN_pS_r$ umfasst, wobei p und r unabhängig größer als 0 sind.

15. Das Verfahren nach einem der vorhergehenden Ansprüche, wobei das aktive Chloramin-Entfernungsmaterial eine Kapazität von mehr als 757 Litern (200 Gallonen) bei einer Leerbettkontaktzeit (empty bed contact time, EBCT) von 4,8 Sekunden aufweist.

## Revendications

1. Procédé d'élimination de la chloramine de solutions aqueuses comprenant : la fourniture d'un matériau actif d'élimination de chloramine,
la fourniture d'une solution aqueuse comprenant de la chloramine, et
la mise en contact de la solution aqueuse avec le matériau actif d'élimination de chloramine, dans lequel le matériau actif d'élimination de chloramine comprend du carbone, plus de 0,5 % en masse d'azote, et plus de 1,2 % en masse de soufre, dans lequel la somme du soufre et de l'azote dans le matériau actif d'élimination de chloramine est d'au moins 4,0 % en masse sur la base de la masse totale du matériau actif d'élimination de chloramine et dans lequel le matériau actif d'élimination de chloramine comprend un produit pouvant être obtenu en tant que produit de réaction thermique d'une réaction thermique de (i) la surface d'un support à base de carbone et (ii) une espèce chimique contenant de l'azote et une espèce chimique contenant du soufre, mise en oeuvre à une température suffisante pour décomposer thermiquement les espèces chimiques d'azote et de soufre ainsi que permettre leur réaction avec le support à base de carbone.

2. Procédé selon la revendication 1, dans lequel pendant l'élimination de la chloramine, au moins 0,2 % en masse du soufre est dans un état d'oxydation supérieur à 0 sur la base de la masse totale du matériau actif d'élimination de chloramine.

3. Procédé selon la revendication 1 ou 2, dans lequel la température est d'au moins 300 °C.

4. Procédé selon l'une quelconque revendication précédente, dans lequel l'espèce chimique contenant de l'azote et l'espèce chimique contenant du soufre sont le même composé.

5. Procédé selon l'une quelconque revendication précédente, dans lequel l'espèce chimique contenant de l'azote et l'espèce chimique contenant du soufre sont un sel de formule $[C]^{+y}{}_x[A]^{-x}{}_y$, dans lequel [C] est un cation, [A] est un anion, et x et y sont indépendamment au moins 1 ; et dans lequel en outre le sel comprend au moins un atome de soufre et au moins un atome d'azote.

**6.** Procédé selon la revendication 5, dans lequel le cation est choisi dans le groupe constitué de : ammonium et ses dérivés alkylés ou arylés, guanidinium, imidazolium, morpholinium, anilinium, thiomorpholinium, phénothazinium, pyridinium, et des combinaisons de ceux-ci.

**7.** Procédé selon l'une quelconque des revendications 5 ou 6, dans lequel l'anion est choisi dans le groupe constitué de : sulfate, bisulfate, sulfite, bisulfite, thiosulfate, polysulfure, sulfamate, polythionate, thiocyanate, et des combinaisons de ceux-ci.

**8.** Procédé selon l'une quelconque des revendications 1 à 7, dans lequel le matériau actif d'élimination de chloramine est exempt de métal.

**9.** Procédé selon l'une quelconque des revendications précédentes, dans lequel le matériau actif d'élimination de chloramine comprend plus de 2,0 % en masse de soufre.

**10.** Procédé selon l'une quelconque des revendications 1 à 9, dans lequel le matériau actif d'élimination de chloramine comprend plus de 6,0 % en masse de soufre.

**11.** Procédé selon l'une quelconque des revendications 1 à 10, dans lequel le matériau actif d'élimination de chloramine comprend plus de 1,0 % en masse d'azote.

**12.** Procédé selon l'une quelconque des revendications 1 à 11, dans lequel la somme du soufre et de l'azote dans le matériau actif d'élimination de chloramine est d'au moins 10,0 % en masse.

**13.** Procédé selon l'une quelconque des revendications 1 à 12, dans lequel le support à base de carbone est un charbon actif.

**14.** Procédé selon l'une quelconque des revendications 1 à 13, dans lequel le matériau actif d'élimination de chloramine comprend $CN_pS_r$, dans lequel p et r sont indépendamment supérieurs à 0.

**15.** Procédé selon l'une quelconque des revendications précédentes, dans lequel le matériau actif d'élimination de chloramine a une capacité supérieure à 757 litres (200 gallons) à un temps de contact de lit vide EBCT de 4,8 secondes.

*Fig. 1*

*Fig. 2*

Throughput (gal) with 100 gal corresponding to 378 liters

- ◆ Comparative Example E
- ▲ Comparative Example D Trial 1
- ■ Example 4
- ✕ Comparative Example D Trial 2

*Fig. 3*

Throughput (gal) with 100 gal corresponding to 378 liters

- ---- Comparative Example D
- —— Example 4
- —— Comparative Example F

*Fig. 4a*

*Fig. 4b*

*Fig. 4c*

Fig. 5

Fig. 6

*Fig. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5338458 A, Carrubba
- US 6699393 B, Baker
- WO 2011125504 A, Hitomi
- US 20040124152 A1
- US 6342129 B1
- US 20090039028 A, Eaton
- US 8206627 B, Stouffer

### Non-patent literature cited in the description

- **WOHLGEMUTH et al.** *Green Chemistry,* 2012, vol. 14, 741-1515